# EUROPÄISCHE PATENTSCHRIFT

(11) **EP 0 563 411 B1**
(45) Veröffentlichungstag und Bekanntmachung des Hinweises auf die Patenterteilung: **10.05.1995**
(21) Anmeldenummer: 92105404.5
(22) Anmeldetag: 28.03.1992
(51) Int. Cl.: G01D 5/26

(54) **Gekapselte Wegmesseinrichtung**
Encapsulated displacement measuring apparatus
Dispositif encapsulé de mesure de déplacement

(43) Veröffentlichungstag der Anmeldung: 06.10.1993
(73) Patentinhaber: Dr. Johannes Heidenhain GmbH, D-83292 Traunreut (DE)
(72) Erfinder: Nelle, Günther, Dr., W-8221 Bergen (DE)

(56) Entgegenhaltungen:
- EP-A- 0 297 251
- PATENT ABSTRACTS OF JAPAN vol. 12, no. 341 (P-758) 13. September 1988 & JP-A-63 100 314
- PATENT ABSTRACTS OF JAPAN vol. 6, no. 225 (P-154)(1103) 10. November 1982 & JP-A-57 128 815
- PATENT ABSTRACTS OF JAPAN vol. 9, no. 9 (P-327) 16. Januar 1985 & JP-A-59 157 515
- PATENT ABSTRACTS OF JAPAN vol. 12, no. 354 (P-761) 22. September 1988 & JP-A-63 108 224

## Beschreibung

Die Erfindung betrifft eine gekapselte Wegmeßeinrichtung mit einer Maßverkörperung gemäß dem Ober begriff von Anspruch 1.

Gekapselte Wegmeßeinrichtungen der obigen Art werden bevorzugt bei Bearbeitungsmaschinen - vorwiegend Fräsmaschinen - eingesetzt. Bei derartigen Maschinen besteht die Gefahr, daß die Wegmeßeinrichtungen trotz Kapselung durch Ölnebel etc. verschmutzt werden und gegebenenfalls fehlerhafte Meßwerte liefern oder sogar ausfallen.

Aus der deutschen Offenlegungsschrift 15 48 871 ist es bereits bekannt, bei einer gekapselten Wegmeßeinrichtung lichtelektrischer Bauart Druckluft in ein Gehäuse einzublasen, das die Maßverkörperung und die Abtasteinheit aufnimmt. Dabei wird im Gehäuseinnern ein Überdruck erzeugt, der dem Eindringen von Störstoffen - insbesondere Ölnebel - entgegenwirkt.

Es ist ferner bekannt - wie die deutsche Offenlegungsschrift DE-A-17 73 403 zeigt - das Gehäuse einer gekapselten Wegmeßeinrichtung lichtelektrischer Bauart mittels eines dachförmigen Doppel-Dichtlippensystems abzudecken. Die Druckluft wird hierbei in den durch die Dichtlippen gebildeten separaten Raum eingespeist, und zwar durch eine Bohrung in einem stirnseitigen Gehäusedeckel. Sie gelangt dabei über Spalte zwischen den Dichtlippen und einem Mitnehmer für die Abtasteinheit auch in das die Maßverkörperung aufnehmende Gehäuse, wobei jedoch der Ort der Luft-Austrittsöffnungen (Spalte) je nach Stellung des Mitnehmers in Meßrichtung variiert.

Nachteilig bei bekannten gekapselten Wegmeßeinrichtungen ist insbesondere, daß mögliche Temperaturunterschiede zwischen der zugeführten Druckluft und Teilen des Meßsystems fehlerhafte Meßergebnisse nach sich ziehen können. Ein weiterer Nachteil ist, daß trotz Einspeisung gefilterter Druckluft, wie allgemein üblich, durch Restverunreinigungen Verschmutzungen in der Wegmeßeinrichtung hervorgerufen werden können, welche deren Genauigkeit zudem beeinträchtigen können.

Der erstgenannte Nachteil wird möglicherweise etwas gemildert durch eine Empfehlung der Hersteller von Wegmeßeinrichtungen an deren Anwender, die Temperatur der in das Gerät einzuspeisenden Druckluft der Umgebungstemperatur der Maschine anzupassen, an welcher die Wegmeßeinrichtung angebaut ist (Druckschrift der Firma RSF Elektronik "Inkrementale Längenmeßsysteme", Seite 5, Ausgabe 6/91). Diese Lösung ist für den Anwender von Wegmeßeinrichtungen nicht nur aufwendig und umständlich, sondern vor allem unsicher, so daß nach wie vor Genauigkeitseinbußen eintreten können.

Aufgabe der Erfindung ist es, die Nachteile des Standes der Technik zu beheben und bei einer gekapselten Wegmeßeinrichtung der eingangs genannten Art auf besonders einfache und sichere Weise zu erreichen, daß die zur Erhöhung der Dichtwirkung eingespeiste Druckluft keinen nachteiligen Einfluß auf die Genauigkeit der Wegmeßeinrichtung ausübt.

Die Erfindung löst die gestellte Aufgabe durch die in Anspruch 1 angegbenen Merkmale.

Durch die Ausbildung mindestens eines Kanals im oder am Gehäuse der Wegmeßeinrichtung, der also direkt Verbindung zur Gehäusewand hat, wird bei entsprechender Kanallänge die Temperatur der eingespeisten Druckluft an die Temperatur von Teilen der Wegmeßeinrichtung angepaßt. Das heißt, daß erst die entsprechend temperierte Druckluft in den Innenraum des Gehäuses eintritt, das die Maßverkörperung und Abtasteinheit aufnimmt. Die Temperaturanpassung der Druckluft geschieht dabei auf sehr einfache und sichere Art und Weise, weil der Anwender der Wegmeßeinrichtung ohne besondere Maßnahmen die Druckluftleitung nur am Gerät anschließen muß. Dabei ist stets gewährleistet, daß die Temperatur der Druckluft die Temperatur des Gehäuses und somit auch die der Maßverkörperung annimmt.

Der Kanal für die Druckluft kann sich dabei - je nach Meßlänge - in etwa über die gesamte Länge des Gehäuses erstrecken oder auch nur über einen Bruchteil desselben, beispielsweise bis hin zur Gehäusemitte. Er verläuft vorzugsweise in Meßrichtung, kann sich aber auch quer zur Meßrichtung erstrecken und gegebenenfalls wechselförmig hin- und hergehende Windungen aufweisen. Auch können mehrere Kanäle für die Druckluft vorgesehen sein. Bei bestimmten Meßlängen kann der Kanal in Meßrichtung auch hin- und hergehend verlaufen.

Zweckmäßig wird der Kanal für die Druckluft durch mindestens eine Bohrung in einer Gehäusewand gebildet. Er kann aber auch in Form eines Rohrleitungssystemes innen oder außen am Gehäuse gestaltet sein. Wesentlich ist, daß die Rohrleitung mit der Gehäusewand in direktem Kontakt steht. Das Gehäuse und die Rohrleitung bestehen vorteilhaft aus Metall. Zur Aufnahme der Rohrleitung weist das Gehäuse zweckmäßig eine Nut auf. Von Vorteil ist ferner, wenn der Kanal für die Druckluft wenigstens eine Filterpatrone und/oder an mindestens einer Stelle eine Mulde nach Art eines Siphon zur Flüssigkeitsaufnahme aufweist, so daß außer der Temperierung noch eine besonders gute Reinigung der Druckluft erzielt wird.

Im folgenden werden Ausführungsbeispiele der Erfindung anhand der Zeichnung näher erläutert.

Es zeigen
- Figur 1: eine schematische Darstellung der kompletten Wegmeßeinrichtung, bei der ein Kanal durch ein Rohr im Gehäuse gebildet ist,
- Figur 2: einen Schnitt durch die Wegmeßeinrichtung nach der Linie II-II der Figur 1,
- Figur 3: eine schematische Darstellung der Wegmeßeinrichtung, bei der in der Gehäusewand ein Kanal eingebracht ist,
- Figur 4: einen Schnitt durch die Wegmeßeinrichtung nach der Linie IV-IV der Figur 3,
- Figur 5: eine schematische Darstellung der Wegmeßeinrichtung, bei der ein Kanal durch ein Rohr außen am Gehäuse gebildet ist,
- Figur 6: einen Schnitt durch die Wegmeßeinrichtung nach der Linie VI-VI der Figur 5,
- Figur 7: eine schematische Darstellung der Wegmeßeinrichtung, bei der ein Kanal durch ein hin- und hergehendes Rohr im Gehäuse gebildet ist,
- Figur 8: einen Schnitt nach der Linie VIII-VIII der Figur 7,
- Figur 9: eine schematische Darstellung der Wegmeßeinrichtung, bei der ein Kanal durch ein Rohr mit einem Siphon gebildet ist,
- Figur 10: einen Schnitt nach der Linie X-X der Figur 9,
- Figur 11: eine schematische Darstellung der Wegmeßeinrichtung, bei der im Gehäuse ein Kanal mit mehreren Luft-Auslaßöffnungen vorgesehen ist,
- Figur 12: einen Schnitt nach der Linie XII-XII der Figur 11,
- Figur 13: eine schematische Darstellung der Wegmeßeinrichtung, bei der ein Kanal im Gehäuse quer zur Meßrichtung vorgesehen ist.
- Figur 14: einen Schnitt nach der Linie XIV-XIV der Figur 13,
- Figur 15: eine schematische Darstellung der Wegmeßeinrichtung, bei der ein Kanal im Gehäuse quer zur Meßrichtung etwa wendelförmig verlaufend ausgebildet ist und
- Figur 16: einen Querschnitt nach der Linie XVI-XVI der Figur 15.

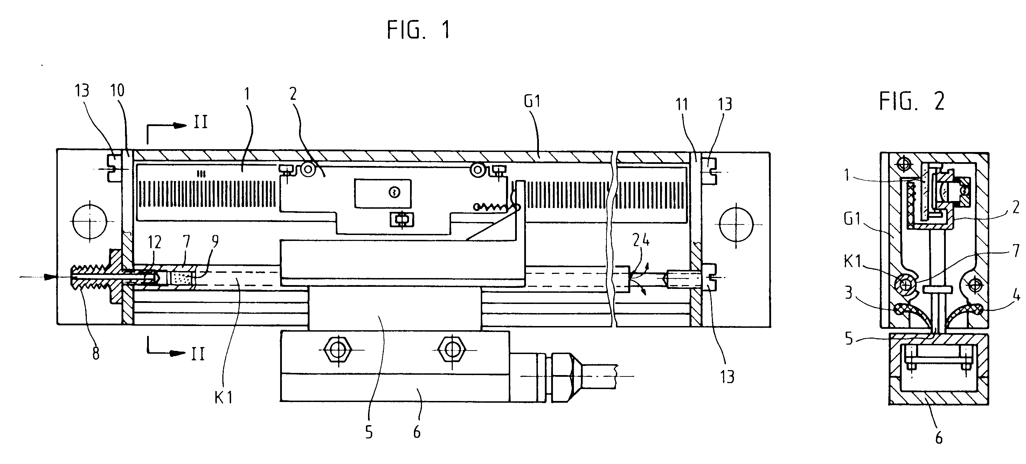

Die Figuren 1 und 2 zeigen eine inkrementale Wegmeßeinrichtung lichtelektrischer Bauart. Diese besitzt eine Maßverkörperung 1 und eine Abtasteinheit 2, die in einem Gehäuse G1 vorgesehen sind. Das Gehäuse G1 ist mittels Dichtlippen 3 und 4 aus Gummi oder Kunststoff abgedeckt, durch die ein Mitnehmer 5 für die Abtasteinheit 2 hindurchgreift. Der Fuß 6 am Mitnehmer 5 ist in nicht dargestellter Weise am Maschinenbett befestigt, während das Gehäuse G1 mit dem Maschinenschlitten verbunden ist. Das Gehäuse G1 besteht zweckmäßig aus Metall, vorzugsweise Aluminium, die Maßverkörperung 1 aus Glas. Die Maßverkörperung 1 ist am Gehäuse G1 über eine elastische Klebeschicht befestigt.

Im Gehäuse G1 ist ein Kanal K1 vorgesehen, durch den Druckluft zur Erhöhung der Dichtwirkung eingespeist wird. Der Kanal K1 wird dabei durch ein Rohr 7 in der Wand des Gehäuses G1 gebildet, das sich in diesem Beispiel fast über die gesamte Länge der Wegmeßeinrichtung erstreckt und dessen Luft-Auslaßöffnung mit 24 bezeichnet ist. Grundsätzlich gilt, daß die Länge des Kanals K1 bzw. der Abstand zwischen dessen Luft-Eintrittsöffnung und Luft-Austrittsöffnung so gewählt ist, daß die Temperatur der über den Anschluß 8 eingespeisten Druckluft in etwa auf die Temperatur des Gehäuses G1 und somit auf die der Maßverkörperung 1 etc. gebracht wird. Durch diese Maßnahme werden Temperaturunterschiede zwischen der in das Gehäuseinnere eintretenden Druckluft und Teilen der Wegmeßeinrichtung vermieden, was sich positiv auf deren Meßgenauigkeit auswirkt.

Das Gehäuse G1 ist stirnseitig mittels abgewinkelter Deckel 10 und 11 verschlossen, die zweckmäßig auch die Befestigungsblöcke zum Anbau an die Maschine bilden. Der Anschluß 8 ist zugleich auch als Befestigungselement für den Deckel 10 ausgebildet und mit einer Durchgangsbohrung 12 für die Druckluft versehen. Die Deckel 10 und 11 sind ferner mittels Schrauben 13 am Gehäuse G1 befestigt, die u.a. in eine das Rohr 7 aufnehmende Bohrung eingeschraubt sind. Im Kanal K1 bzw. im Rohr 7 befindet sich eine Filterpatrone 9, die eine besonders gute Reinigung der Druckluft bewirkt.

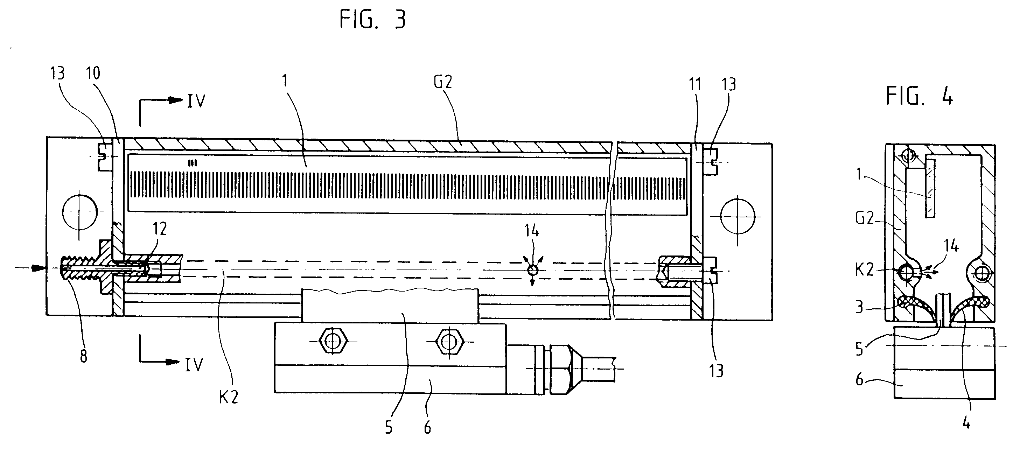

In den Figuren 3 und 4 wird der Kanal K2 für Druckluft durch eine Bohrung direkt im Gehäuse G2 gebildet, wobei mit 14 die Luft-Auslaßöffnung bezeichnet ist.

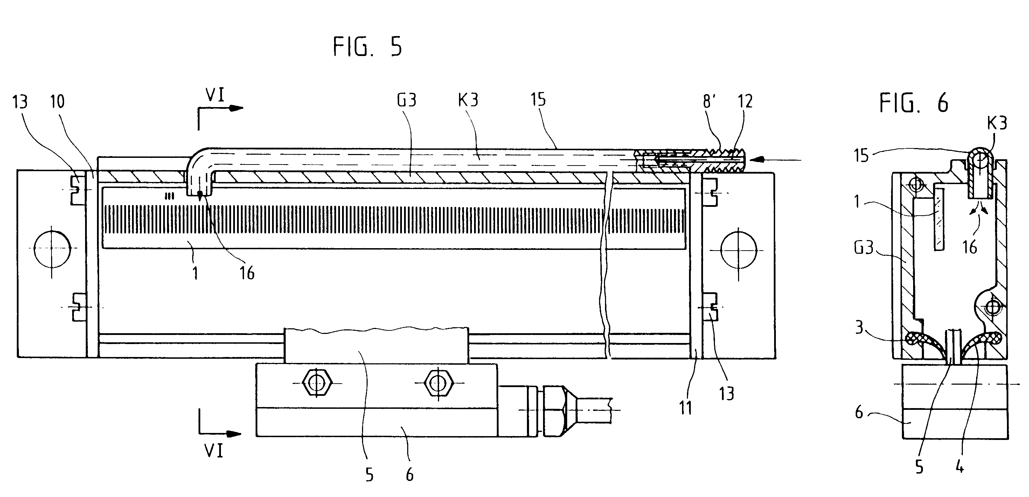

Die Figuren 5 und 6 zeigen eine Wegmeßeinrichtung, bei welcher der Kanal K3 durch ein Rohr 15 gebildet ist, das außen am Gehäuse G3 in direktem Kontakt mit diesem angebracht ist und dessen Luft-Auslaßöffnung 16 in das Gehäuseinnere ragt. Das Gehäuse G3 und das Rohr 15 bestehen dabei aus Metall. Die Druckluft wird über den Anschluß 8' zugeführt, der eine Bohrung 12 aufweist.

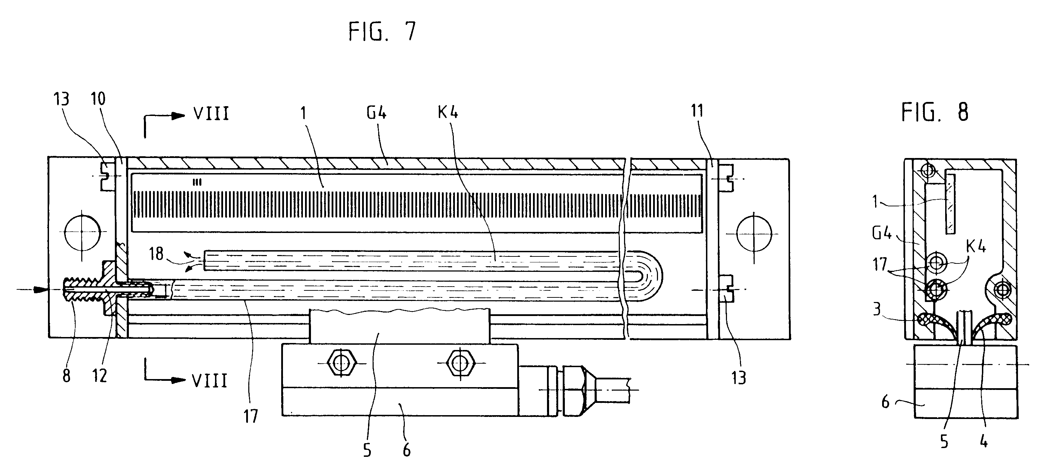

Ähnlich der Figur 1 wird in den Figuren 7 und 8 der Kanal K4 durch ein Rohr 17 im Inneren des Gehäuses G4 gebildet, jedoch ist dessen Länge durch den hin- und hergehenden Verlauf wesentlich größer als die Meßlänge. Mit 18 ist die Luft-Auslaßöffnung des Kanals K4 bezeichnet.

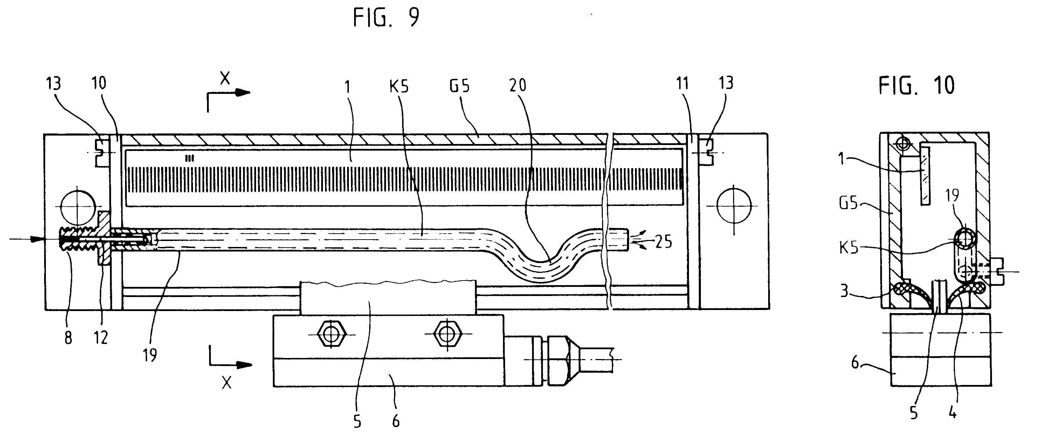

Auch die Figuren 9 und 10 zeigen eine Wegmeßeinrichtung mit einem Rohr 19 im Gehäuse G5 zur Bildung eines Kanals K5, das aber in der Nähe der Luft-Auslaßöffnung 25 eine Mulde 20 nach Art eines Siphons zur Flüssigkeitsaufnahme aufweist.

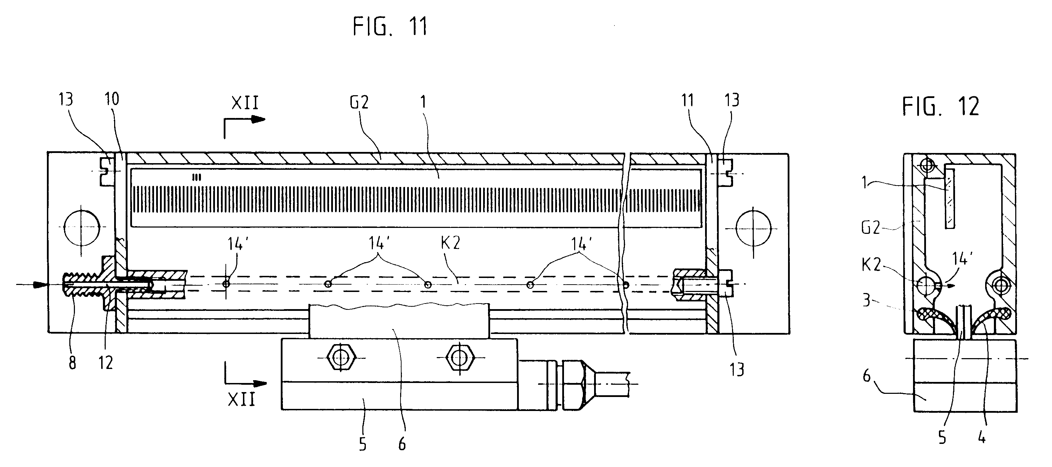

Die Figuren 11 und 12 unterscheiden sich von Figur 3 faktisch nur durch mehrere Luft-Auslaßöffnungen 14' im Kanal K2, durch welche die Luft gleichmäßig über die Länge der Maßverkörperung 1 verteilt wird.

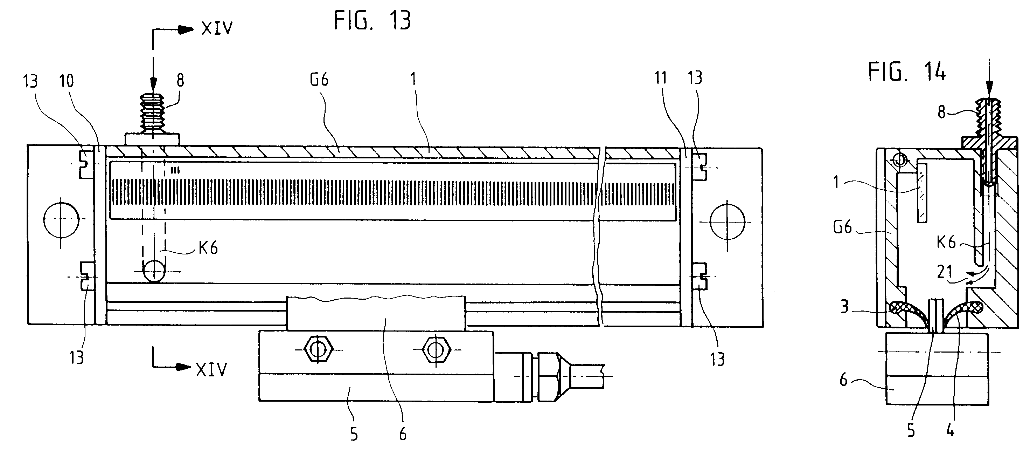

Im Ausführungsbeispiel der Figuren 13 und 14 verläuft der Kanal K6 im Gehäuse G6 nicht wie bei den anderen Lösungen in Meßrichtung, sondern quer dazu. Mit 21 ist die Luft-Auslaßöffnung des Kanals K6 bezeichnet.

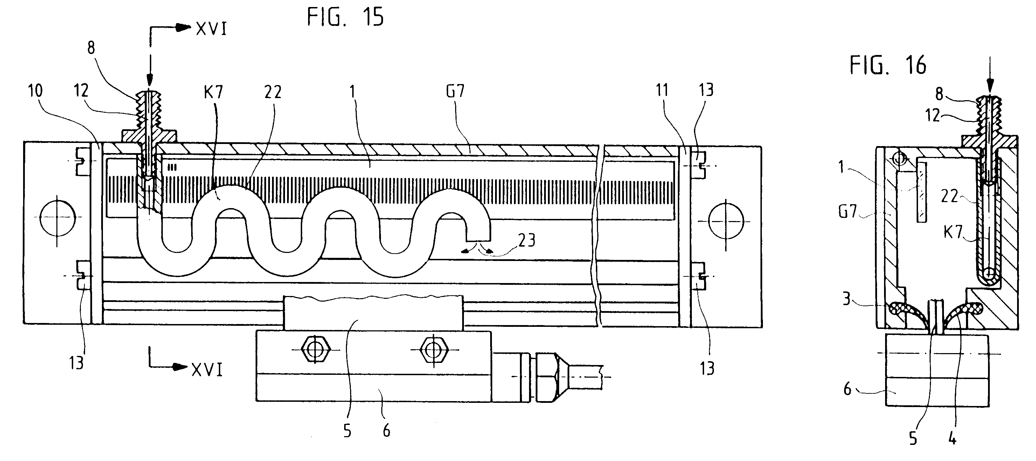

In den Figuren 15 und 16 verläuft der Kanal K7, der durch ein Rohr 22 im Gehäuse G7 mit der Luft-Auslaßöffnung 23 gebildet ist, wieder quer zur Meßrichtung, jedoch abweichend von Figur 13 etwa wendelförmig, so daß dessen Länge ein Vielfaches der Länge des Kanals K6 ist.

In nicht gezeigter Weise kann der Kanal für die Druckluft zumindest partiell heizbar oder kühlbar sein. Das nur kurzzeitige Heizen vor Beginn der Messungen führt zu einer Erhöhung der Wasseraufnahmefähigkeit der Druckluft, so daß eine im Gerät vorhandene Feuchtigkeit austrocknet. Durch anschließendes kurzzeitiges Kühlen kann die Druckluft wieder auf die Normaltemperatur gebracht werden.

Die Erfindung ist auch nicht auf eine inkrementale Wegmeßeinrichtung lichtelektrischer Bauart beschränkt, sondern ganz allgemein bei gekapselten Meßeinrichtungen anwendbar, die auch nach dem induktiven, magnetischen, kapazitiven Abtastprinzip etc. arbeiten können.

## Patentansprüche

1. Gekapselte Wegmeßeinrichtung mit einer Maßverkörperung (1), einer Abtasteinheit (2) und einem diese Teile umschließenden Gehäuse (G1, G2, G3, G4, G5, G6, G7),in das zur Erhöhung der Dichtwirkung Druckluft durch eine Durgangsbohrung (12) eingespeist wird und das eine mittels Dichtelemente (3, 4) abgedeckte Öffnung aufweist, durch die ein Mitnehmer für die Abtasteinheit und zur Befestigung an einem der beweglichen Objekte hindurchgreift, deren Relativlage gemessen oder eingestellt werden soll, dadurch gekennzeichnet, daß an die Durchgangsbohrung (12) mindestens ein im Gehäuse (G2, G6) selbst eingebrachter gesonderter Kanal (K2, K6) und/oder mindestens ein direkt am Gehäuse (G1, G3, G4, G5, G7) in Form einer gesonderten Rohrleitung (7, 15, 17, 19, 22) gebildeter Kanal (K1, K3, K4, K5, K7) angeschlossen ist, und daß die Länge des Kanal (K2, K6 bzw. K1, K3, K4, K5, K7) bzw. zumindest dessen fester Abstand zwischen der Durchgangsbohrung (12) und einer Auslaßöffnung (14, 14', 21 bzw. 24, 16, 18, 25, 23) für die Druckluft so gewählt ist, daß in betriebsbereitem Zustand die Temperatur der Druckluft in etwa auf die Temperatur des Gehäuses (G2, G6 bzw. G1, G3, G4, G5, G7) gebracht wird.

2. Wegmeßeinrichtung nach Anspruch 1, dadurch gekennzeichnet, daß sich der Kanal (K1, K2, K3, K5, K7) für die Druckluft in Meßrichtung vorzugsweise in etwa über die Länge des Gehäuses (G1, G2, G3, G5, G7) erstreckt.

3. Wegmeßeinrichtung nach Anspruch 1, dadurch gekennzeichnet, daß die Länge des Kanals (K4) für die Druckluft durch hin- und hergehenden Verlauf über die Länge des Gehäuses (G4) hinausgeht.

4. Wegmeßeinrichtung nach Anspruch 1, dadurch gekennzeichnet, daß sich die Länge des Kanals (K6) für die Druckluft nur über einen Bruchteil der Länge des Gehäuses (G6) erstreckt.

5. Wegmeßeinrichtung nach Anspruch 1 bis 4, dadurch gekennzeichnet, daß der Kanal (K2, K6) für die Druckluft durch eine Bohrung zumindest in einer Wand des Gehäuses (G2, G6) gebildet ist.

6. Wegmeßeinrichtung nach Anspruch 1 bis 4, dadurch gekennzeichnet, daß die den Kanal (K1, K3, K4, K5, K7) bildende Rohrleitung (7, 15, 17, 19, 22) für die Druckluft innen und/oder außen am Gehäuse (G1, G3, G4, G5, G7) vorgesehen ist.

7. Wegmeßeinrichtung nach Anspruch 6, dadurch gekennzeichnet, daß die Rohrleitung (7, 15, 17, 19, 22) mit dem Gehäuse (G1, G3, G4, G5, G7) in direktem Kontakt steht.

8. Wegmeßeinrichtung nach Anspruch 7, dadurch gekennzeichnet, daß das Gehäuse (G1, G3) eine Nut zur Aufnahme der Rohrleitung (7, 15) aufweist.

9. Wegmeßeinrichtung nach Anspruch 1, dadurch gekennzeichnet, daß das Gehäuse (G1, G3, G4, G5, G7) und die Rohrleitung (7, 15, 17, 19, 22) aus Metall bestehen.

10. Wegmeßeinrichtung nach Anspruch 1, dadurch gekennzeichnet, daß das Gehäuse (G1, G2, G3, G4, G5, G6, G7) der Träger für die Maßverkörperung (1) ist.

11. Wegmeßeinrichtung nach Anspruch 10, dadurch gekennzeichnet, daß die Maßverkörperung (1) über eine elastische Klebeschicht mit dem Gehäuse (G1, G2, G3, G4, G5, G6, G7) verbunden ist.

12. Wegmeßeinrichtung nach Anspruch 1, dadurch gekennzeichnet, daß der Kanal (K5) für die Druckluft mindestens an einer Stelle eine Mulde (20) nach Art eines Siphons zur Flüssigkeitsaufnahme aufweist.

13. Wegmeßeinrichtung nach Anspruch 1, dadurch gekennzeichnet, daß im Kanal (K1) für die Druckluft mindestens eine Filterpatrone (9) eingesetzt ist.

14. Wegmeßeinrichtung nach Anspruch 1, dadurch gekennzeichnet, daß das Gehäuse (G1, G2, G4, G5) mittels Deckel (10, 11) stirnseitig verschlossen ist, und daß die Öffnungen für den Kanal (K1, K2, K4, K5) in einem der Deckel (10) die Befestigungsschrauben (8) aufnehmen, die jeweils eine Durchgangsbohrung (12) für die Druckluft aufweisen.

15. Wegmeßeinrichtung nach Anspruch 1, dadurch gekennzeichnet, daß sich der Kanal (K6) für die Druckluft quer zur Meßrichtung erstreckt.

16. Wegmeßeinrichtung nach Anspruch 15, dadurch gekennzeichnet, daß der Kanal (K7) etwa wendelförmig hin- und hergehend geführt ist.

17. Wegmeßeinrichtung nach Anspruch 1, dadurch gekennzeichnet, daß zur gleichmäßigen Verteilung der eingespeisten Druckluft der Kanal (K2) mehrere Auslaßöffnungen (14') aufweist.

18. Wegmeßeinrichtung nach Anspruch 1, dadurch gekennzeichnet, daß der Kanal für die Druckluft zumindest partiell heizbar oder kühlbar ist.

## Claims

1. An encapsulated displacement measuring device with a measuring entity (1), a sensing unit (2) and a housing (G1, G2, G3, G4, G5, G6, G7) enclosing these parts, into which housing compressed air is fed in through a through bore (12) to enhance the sealing action and which has an opening covered by sealing elements (3, 4), through which engages an entraining member for the sensing unit and for fixing to one of the movable objects whose relative position is to be measured or set, characterized in that at least one channel (K2, K6) formed in the housing (G2, G6) itself and/or at least one channel (K1, K3, K4, K5, K7) formed directly on the housing (G1, G3, G4, G5, G7) in the form of a separate pipeline (7, 15, 17, 19, 22) is connected to the through bore (12) and in that the length of the channel (K2, K6 or K1, K3, K4, K5, K7) or at least its fixed distance between the through bore (12) and an outlet opening (14, 14', 21 or 24, 16, 18, 25, 23) for the compressed air is so selected that, in the state of readiness for operation, the temperature of the compressed air is brought approximately to the temperature of the housing (G2, G6 or G1, G3, G4, G5, G7).

2. A displacement measuring device according to claim 1, characterized in that the channel (K1, K3, K4, K5, K7) for the compressed air preferably extends in the measuring direction over approximately the length of the housing (G1, G2, G3, G5, G7).

3. A displacement measuring device according to claim 1, characterized in that the length of the channel (K4) for the compressed air extends by virtue of a to and fro path beyond the length of the housing (G4).

4. A displacement measuring device according to claim 1, characterized in that the length of the channel (K6) for the compressed air only extends over a fraction of the length of the housing (G6).

5. A displacement measuring device according to claims 1 to 4, characterized in that the channel (K2, K6) for the compressed air is formed by a bore in at least one wall of the housing (G2, G6).

6. A displacement measuring device according to claims 1 to 4, characterized in that the pipeline (7, 15, 17, 19, 22) forming the channel (K1, K3, K4, K5, K7) for the compressed air is provided within and/or without the housing (G1, G3, G4, G5, G7).

7. A displacement measuring device according to claim 6, characterized in that the pipeline (7, 15, 17, 19, 22) is in direct contact with the housing (G1, G3, G4, G5, G7).

8. A displacement measuring device according to claim 7, characterized in that the housing (G1, G3) has a groove for reception of the pipeline (7, 15).

9. A displacement measuring device according to claim 1, characterized in that the housing (G1, G3, G4, G5, G7) and the pipeline (7, 15, 17, 19, 22) consist of metal.

10. A displacement measuring device according to claim 1, characterized in that the housing (G1, G2, G3, G4, G5, G6, G7) is the support for the measuring entity (1).

11. A displacement measuring device according to claim 10, characterized in that the measuring entity (1) is bonded to the housing (G1, G2, G3, G4, G5, G6, G7) by an elastic adhesive layer.

12. A displacement measuring device according to claim 1, characterized in that the channel (K5) for the compressed air has a trough (20) in the nature of a trap for reception of fluid in at least one place.

13. A displacement measuring device according to claim 1, characterized in that at least one filter cartridge (9) is fitted in the channel (K1) for the compressed air.

14. A displacement measuring device according to claim 1, characterized in that the housing (G1, G2, G4, G5) is closed at the ends by means of covers (10, 11) and in that the openings for the channel (K1, K2, K4, K5) in one of the covers (10) receive the fixing screws which each have a through bore (12) for the compressed air.

15. A displacement measuring device according to claim 1, characterized in that the channel (K6) for the compressed air extends transversely to the measuring direction.

16. A displacement measuring device according to claim 1, characterized in that the channel (K7) runs to an fro in meandering manner.

17. A displacement measuring device according to claim 1, characterized in that the channel (K2) has a plurality of outlet openings (14') for uniform distribution of the compressed air which is fed in.

18. A displacement measuring device according to claim 1, characterized in that the channel for the compressed air can at least partially be heated or cooled.

## Revendications

1. Dispositif étanche de mesure de déplacement comprenant un élément (1) de matérialisation de mesure, une unité d'exploration (2) et un boîtier (G1, G2, G3, G4, G5, G6, G7) qui entoure ces parties, dans lequel de l'air sous pression est introduit par un trou de passage (12) en vue de l'augmentation de l'effet d'étancheité, et qui présente une ouverture recouverte par des éléments d'étancheité (3, 4) et traversé par un entraîneur pour l'unité d'exploration et pour la fixation à l'un des objets mobiles dont la position relative doit être mesurée ou réglée, caractérisé par le fait qu'au moins un canal (K2, K6) séparé ménagé dans le boîtier (G2, G6) lui-même et/ou au moins un canal (K1, K3, K4, K5, K7) formé directement sur le boîtier (G1, G3, G4, G5, G7) sous la forme d'un conduit tubulaire séparé (7, 15, 17, 19, 22) est raccordé au trou de passage (12) et que la longueur du canal (K2, K6 ou K1, K3, K4, K5, K7) ou au moins la distance fixe de ce canal entre le trou de passage (12) et une ouverture de sortie (14, 14', 21 ou 24, 16, 18, 25, 23) pour l'air sous pression est choisie de manière qu'en état de disponibilité de fonctionnement, la température de l'air sous pression soit amenée à peu près à la température du boîtier (G2, G6 ou G1, G3, G4, G5, G7).

2. Dispositif de mesure de déplacement suivant revendication 1, caractérisé par le fait que le canal (K1, K2, K3, K5, K7) pour l'air sous pression s'étend dans la direction de mesure de préférence à peu près sur la longueur du boîtier (G1, G2, G3, G5, G7).

3. Dispositif de mesure de déplacement suivant revendication 1, caractérisé par le fait que la longueur du canal (K4) pour l'air sous pression est supérieure à la longueur du boîtier (G4) grâce à un tracé en va-et-vient.

4. Dispositif de mesure de déplacement suivant revendication 1, caractérisé par le tait que la longueur du canal (K6) pour l'air sous pression ne s'étend que sur une fraction de la longueur du boîtier (G6).

5. Dispositif de mesure de déplacement suivant revendication 1 à 4, caractérisé par le fait que le canal (K2, K6) pour l'air sous pression est formé par un trou dans au moins une paroi du boîtier (G2, G6).

6. Dispositif de mesure de déplacement suivant revendication 1 à 4, caractérisé par le fait que le conduit tubulaire (7, 15, 17, 19, 22) pour l'air comprimé, formant le canal (K1, K3, K4, K5, K7), est prévu intérieurement et/ou extérieurement sur le boîtier (G1, G3, G4, G5, G7).

7. Dispositif de mesure de déplacement suivant revendication 4, caractérisé par le fait que le conduit tubulaire (7, 15, 17, 19, 22) se trouve en contact direct avec le boîtier (G1, G3, G4, G5, G7).

8. Dispositif de mesure de déplacement suivant revendication 7, caractérisé par le fait que le boîtier (G1, G3) présente une rainure pour recevoir le conduit tubulaire (7, 15).

9. Dispositif de mesure de déplacement suivant revendication 1, caractérisé par le fait que le boîtier (G1, G3, G4, G5, G7) et le conduit tubulaire 7, 15, 19, 22) sont en métal.

10. Dispositif de mesure de déplacement suivant revendication 1, caractérisé par le fait que le boîtier (G1, G2, G3, G4, G5, G6, G7) constitue le support pour l'élément de matérialisation de mesure (1).

11. Dispositif de mesure de déplacement suivant revendication 10, caractérisé par le fait que l'élément de matérialisation de mesure (1) est relié au boîtier (G1, G2, G3, G4, G5, G6, G7) en passant par une couche de colle élastique.

12. Dispositif de mesure de déplacement suivant revendication 1, caractérisé par le fait que le canal (K5) pour l'air sous pression présente en un endroit au moins un creux (20) à la manière d'un siphon, en vue de la réception de liquide.

13. Dispositif de mesure de déplacement suivant revendication 1, caractérisé par le fait qu'au moins une cartouche filtrante (9) est insérée dans le canal (K1) pour l'air sous pression.

14. Dispositif de mesure de déplacement suivant revendication 1, caractérisé par le faif que le boîtier (G1, G2, G4, G5) est fermé frontalement par des couvercles (10, 11) et que les ouvertures pour le canal (K1, K2, K4, K5) dans l'un des couvercles (10) reçoivent les vis de fixation (8) dont chacune présente un trou de passage (12) pour l'air sous pression.

15. Dispositif de mesure de déplacement suivant revendication 1, caractérisé par le fait que le canal (K6) pour l'air sous pression s'étend transversalement à la direction de mesure.

16. Dispositif de mesure de déplacement suivant revendication 15, caractérisé par le fait que le canal (K7) présente un tracé en va-et-vient de forme à peu près ondulée.

17. Dispositif de mesure de déplacement suivant revendication 1, caractérisé par le fait que le canal (K2) présente plusieurs ouvertures de sortie (14') pour répartir de façon uniforme l'air sous pression qui y est introduit.

18. Dispositif de mesure de déplacement suivant revendication 1, caractérisé par le fait que le canal pour l'air sous pression peut être en partie au mains chauffé ou refroidi.
